# EUROPEAN PATENT APPLICATION

(11) **EP 4 368 277 A1**
(43) Date of publication of application: **15.05.2024**
(21) Application number: 23763397.9
(22) Date of filing: 27.02.2023
(51) Int. Cl.: B01D 53/32, B01D 53/02, B01D 53/62

(54) **GAS ADSORPTION SYSTEM AND GAS ADSORPTION SYSTEM OPERATION METHOD**

(30) Priority: 04.03.2022 JP 2022033831
(71) Applicant: NGK Insulators, Ltd., Nagoya-shi, Aichi 467-8530 (JP)
(72) Inventor: KAN, Hirofumi, Nagoya-shi, Aichi 467-8530 (JP); TORII, Atsushi, Nagoya-shi, Aichi 467-8530 (JP); NAKAGAWA, Kosuke, Nagoya-shi, Aichi 467-8530 (JP); IIDA, Kazuki, Nagoya-shi, Aichi 467-8530 (JP)
(74) Representative: Müller-Boré & Partner Patentanwälte PartG mbB
(86) International application number: PCT/JP2023/007057
(87) International publication number: WO 2023/167139

(57) **Abstract**

Provided are a gas adsorption system capable of efficiently separating and capturing a predetermined gas, and a method of operating the gas adsorption system. The gas adsorption system according to an embodiment of the present invention includes a plurality of gas adsorption units each including an electrochemical device configured to adsorb and release a predetermined gas. The plurality of gas adsorption units include: a first adsorption unit to which the predetermined gas is supplied; and a second adsorption unit to which the gas having passed through the first adsorption unit is supplied.

## Description

### Technical Field

The present invention relates to a gas adsorption system and a method of operating the gas adsorption system.

### Background Art

The development of a technology for separating and capturing a predetermined gas from a gas mixture has been continuously advanced. In particular, in recent years, it has been required that carbon dioxide (CO₂) emissions be reduced in order to mitigate global warming, and an attempt has been made to separate and capture carbon dioxide from the gas mixture. A Carbon dioxide Capture, Utilization and Storage (CCUS) cycle is known as a typical example of such attempt. In this connection, for the capture of carbon dioxide, for example, a chemical adsorption method, a physical adsorption method, a cryogenic separation method, a membrane separation method, and an electrochemical capturing method are known. However, currently, those technologies are each insufficient in ability to capture carbon dioxide and there are limits to efficient capture of carbon dioxide, and thus various issues to be considered remain for their practical use.

### Citation List

### Patent Literature

[PTL 1] JP 2018-533470 A

### Summary of Invention

### Technical Problem

A primary object of the present invention is to provide a gas adsorption system capable of efficiently separating and capturing a predetermined gas, and a method of operating the gas adsorption system.

### Solution to Problem

[1] According to one embodiment of the present invention, there is provided a gas adsorption system including a plurality of gas adsorption units each including an electrochemical device configured to adsorb and release a predetermined gas. The plurality of gas adsorption units include: a first adsorption unit to which the predetermined gas is supplied; and a second adsorption unit to which the gas having passed through the first adsorption unit is supplied.
[2] In the gas adsorption system according to the above-mentioned item [1], the electrochemical device includes: a function electrode containing a first active material; and a counter electrode containing a second active material.
[3] In the gas adsorption system according to the above-mentioned item [2], the predetermined gas may be carbon dioxide, the first active material may include anthraquinone, and the second active material may include polyvinylferrocene.
[4] In the gas adsorption system according to any one of the above-mentioned items [1] to [3], the plurality of gas adsorption units may further include a third adsorption unit to which the gas having passed through the second adsorption unit is supplied.
[5] According to another embodiment of the present invention, there is provided a method of operating the above-mentioned gas adsorption system including: a first adsorption step of supplying the predetermined gas to the first adsorption unit, and supplying the gas having passed through the first adsorption unit to the second adsorption unit, to thereby cause the predetermined gas to be adsorbed to each of the first adsorption unit and the second adsorption unit; and a second adsorption step of, while stopping the supply of the predetermined gas to the first adsorption unit, supplying the predetermined gas to the second adsorption unit, and supplying the gas having passed through the second adsorption unit to the third adsorption unit, to thereby cause the predetermined gas to be adsorbed to each of the second adsorption unit and the third adsorption unit.
[6] The method of operating the gas adsorption system according to the above-mentioned item [5] may further include: a first release step of releasing the predetermined gas, which has been adsorbed to the first adsorption unit, from the first adsorption unit after end of the first adsorption step and before end of the second adsorption step; and a third adsorption step of, while stopping the supply of the predetermined gas to the second adsorption unit, supplying the predetermined gas to the third adsorption unit, and supplying the gas having passed through the third adsorption unit to the first adsorption unit, to thereby cause the predetermined gas to be adsorbed to each of the first adsorption unit and the third adsorption unit.
[7] The method of operating the gas adsorption system according to the above-mentioned item [6] may further include: sequentially repeating the first adsorption step, the second adsorption step, and the third adsorption step; a second release step of releasing the predetermined gas, which has been adsorbed to the second adsorption unit, from the second adsorption unit after end of the second adsorption step and before end of the third adsorption step; and a third release step of releasing the predetermined gas, which has been adsorbed to the third adsorption unit, from the third adsorption unit after end of the third adsorption step and before end of the repeated first adsorption step.

### Advantageous Effects of Invention

According to the embodiments of the present invention, the gas adsorption system capable of efficiently separating and capturing a predetermined gas, and the method of operating the gas adsorption system can be achieved.

### Brief Description of Drawings

FIG. **1** is a schematic configuration diagram of a gas adsorption system according to one embodiment of the present invention.
FIG. **2** is a schematic perspective view of an electrochemical device of the gas adsorption system of FIG. 1.
FIG. **3** is a schematic sectional view of the electrochemical device of FIG. **2** in a direction parallel to a cell extending direction.
FIG. **4** is an enlarged schematic sectional view of a main portion of the electrochemical device of each of FIG. **2** and FIG. **3** in a direction perpendicular to the cell extending direction.
FIG. **5** is an enlarged schematic sectional view of a main portion of an electrochemical device according to another embodiment of the present invention in a direction perpendicular to a cell extending direction.
FIG. **6** is an enlarged schematic sectional view of a main portion of an electrochemical device according to still another embodiment of the present invention in a direction perpendicular to a cell extending direction.
FIG. **7** is an enlarged schematic sectional view of a main portion of an electrochemical device according to still another embodiment of the present invention in a direction perpendicular to a cell extending direction.
FIG. **8** is an enlarged schematic sectional view of a main portion of an electrochemical device according to still another embodiment of the present invention in a direction perpendicular to a cell extending direction.
FIG. **9** is a process flow chart for illustrating a method of operating a gas adsorption system of one embodiment of the present invention.
FIG. **10** is a process flow chart for illustrating a first adsorption step of FIG. **9****.**
FIG. **11** is a process flow chart for illustrating a second adsorption step of FIG. **9****.**
FIG. **12** is a process flow chart for illustrating a third adsorption step of FIG. **9****.**

### Description of Embodiments

Embodiments of the present invention are described below with reference to the drawings. However, the present invention is not limited to these embodiments.

### A. Overall Configuration of Gas Adsorption System

A gas adsorption system according to an embodiment of the present invention separates and captures a predetermined gas (e.g., carbon dioxide) from a gas mixture through use of an electrochemical device configured to adsorb and release the predetermined gas (e.g., carbon dioxide) by an electrochemical process.

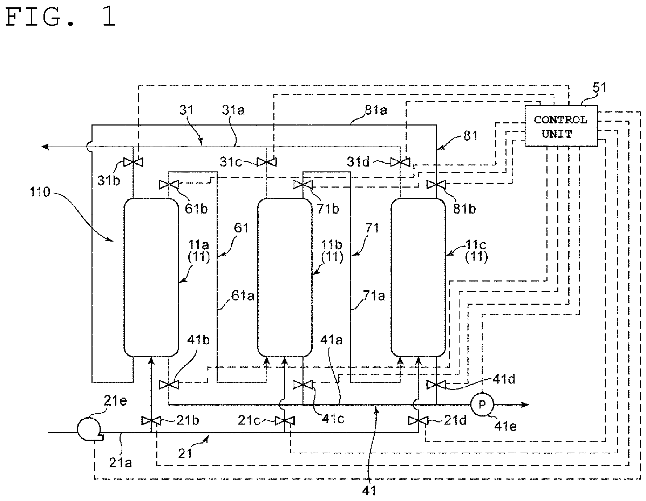

FIG. **1** is a schematic configuration diagram of a gas adsorption system according to one embodiment of the present invention. A gas adsorption system **110** of the illustrated example includes a plurality of adsorption columns **11** each serving as an example of a gas adsorption unit.

The adsorption columns **11** each include an electrochemical device configured to adsorb and release a predetermined gas (e.g., carbon dioxide). The plurality of adsorption columns **11** include a first adsorption column **11a** serving as an example of a first adsorption unit and a second adsorption column **11b** serving as an example of a second adsorption unit. The first adsorption column **11a** has supplied thereto the predetermined gas (e.g., carbon dioxide). The second adsorption column **11b** has supplied thereto the gas having passed through the first adsorption column **11a.** With such configuration, the predetermined gas can be sequentially adsorbed to the first adsorption column **11a** and the second adsorption column **11b.** Even when the predetermined gas slips from the first adsorption column **11a,** the predetermined gas having slipped from the first adsorption column **11a** can be adsorbed to the second adsorption column **11b.** For example, when the predetermined gas is separated and captured from a gas mixture through use of one adsorption column **11,** it is required that the slipping of the predetermined gas from the adsorption column **11** be suppressed by providing a distance (run-up zone) required for adsorption of the predetermined gas in a downstream end portion of a gas adsorption region of the adsorption column **11** in a passage direction of the gas mixture. In a general adsorption step, the run-up zone is a margin region that is not utilized for the adsorption of the predetermined gas. Meanwhile, with the above-mentioned configuration, even when the predetermined gas slips from the first adsorption column **11a,** the predetermined gas can be adsorbed to the second adsorption column **11b,** and hence the run-up zone in the gas adsorption region of the first adsorption column **11a** can be shortened, and the gas adsorption capacity of the first adsorption column **11a** can be efficiently utilized. In addition, the gas adsorption capacity of the first adsorption column **11a** can also be fully used without arranging the run-up zone in the gas adsorption region of the first adsorption column **11a.** As a result, the predetermined gas can be efficiently separated and captured from the gas mixture, and the slipping of the predetermined gas from the gas adsorption system **110** can be suppressed. For example, an exhaust gas from a plant or a thermal power station includes about 10% of carbon dioxide. In view of the foregoing, the concentration of carbon dioxide in the gas mixture having the same composition as such exhaust gas can be reduced to 0.1% or less after the gas mixture has passed through the adsorption columns **11** by the gas adsorption system according to one embodiment of the present invention.

In one embodiment of the present invention, the plurality of adsorption columns **11** further include a third adsorption column **11c** serving as an example of a third adsorption unit. That is, the plurality of adsorption columns **11** may be formed of the first adsorption column **11a,** the second adsorption column **11b,** and the third adsorption column **11c.** The third adsorption column **11c** has supplied thereto the gas having passed through the second adsorption column **11b.** With such configuration, after the end of the adsorption of the predetermined gas to the first adsorption column **11a,** the adsorption of the predetermined gas can be performed through use of the second adsorption column **11b** and the third adsorption column **11c.** In addition, at the time of the adsorption of the predetermined gas to the second adsorption column **11b** and the third adsorption column **11c,** the predetermined gas can be released from the first adsorption column **11a.**

In one embodiment of the present invention, the gas adsorption system **110** includes, in addition to the plurality of adsorption columns **11,** a gas supply unit **21,** a discharge unit **31,** a gas capture unit **41,** a first connection unit **61,** a second connection unit **71,** a third connection unit **81,** and a control unit **51.** With such configuration, the predetermined gas (e.g., carbon dioxide) can be smoothly separated and captured from the gas mixture, and the predetermined gas having been adsorbed to the adsorption columns **11** can be smoothly released from the adsorption columns **11.**

The constituents of the gas adsorption system are specifically described below.

### B. Adsorption Columns

In one embodiment of the present invention, the plurality of adsorption columns **11** (the first adsorption column **11a,** the second adsorption column **11b,** and the third adsorption column **11c**) may have the same configuration as one another, or may have different configurations from one another. The plurality of adsorption columns **11** (the first adsorption column **11a,** the second adsorption column **11b,** and the third adsorption column **11c**) preferably have the same configuration as one another. When the plurality of adsorption columns **11** have the same configuration as one another, a reduction in facility cost can be achieved. The adsorption columns **11** each include a plurality of electrochemical devices and a reaction vessel in which the plurality of electrochemical devices are accommodated.

### B-1. Electrochemical Device

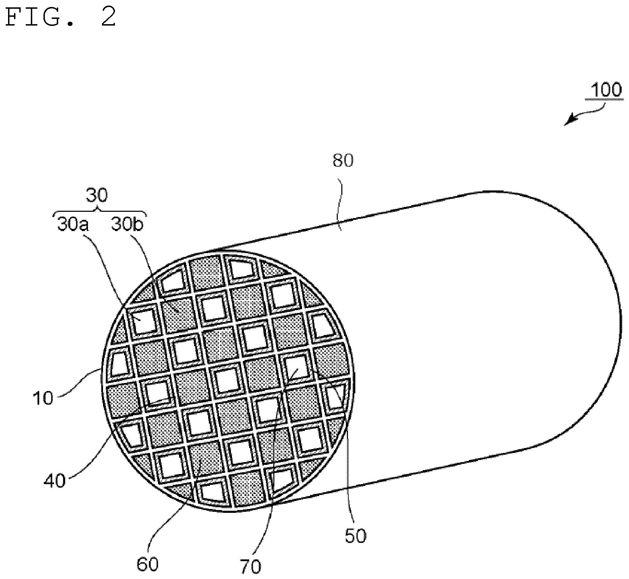

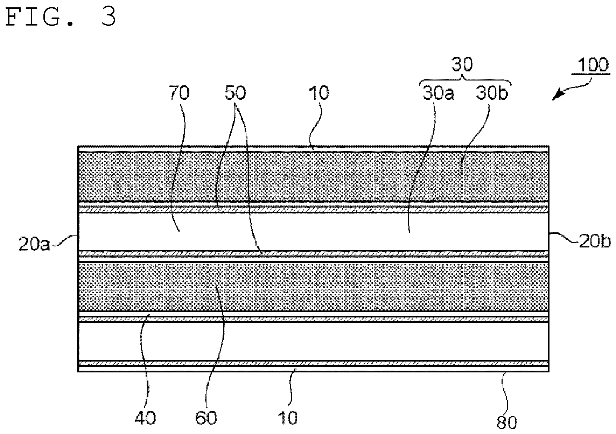

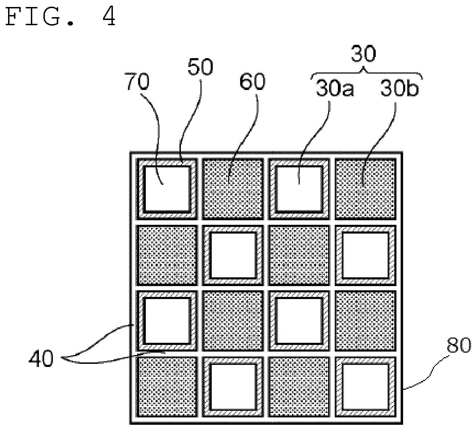

FIG. **2** is a schematic perspective view of an electrochemical device of the gas adsorption system of FIG. **1****,** FIG. **3** is a schematic sectional view of the electrochemical device of FIG. **2** in a direction parallel to a cell extending direction, and FIG. **4** is an enlarged schematic sectional view of a main portion of the electrochemical device of each of FIG. **2** and FIG. **3** in a direction perpendicular to the cell extending direction. An electrochemical device **100** of the illustrated example includes a function electrode **50** and a counter electrode **60.**

### B-1-1. Function Electrode

A function electrode contains a first active material, and is configured to capture and release a predetermined gas (e.g., carbon dioxide). A typical example of the first active material is anthraquinone. Anthraquinone can capture (trap, adsorb) and release carbon dioxide by an electrochemical reaction described below. Anthraquinone may be polyanthraquinone (that is, a polymer). Examples of the polyanthraquinone include poly(1,4-anthraquinone) represented by the following formula (I), poly(1,5-anthraquinone), poly(1,8-anthraquinone), and poly(2,6-anthraquinone). Those anthraquinones may be used alone or in combination thereof.

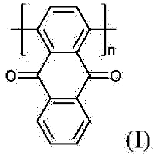

Any appropriate substance other than anthraquinone may be used as the first active material as long as the substance can capture and release (particularly, capture) the predetermined gas (e.g., carbon dioxide). Examples of such substance include tetrachlorohydroquinone (TCHQ), hydroquinone (HQ), dimethoxybenzoquinone (DMBQ), naphthoquinone (NQ), tetracyanoquinodimethane (TCNQ), dihydroxybenzoquinone (DHBQ), and polymers thereof.

The function electrode may further contain a substrate. Herein, the "substrate" refers to a component that shapes an electrode (layer) and maintains the shape thereof. Further, the substrate may support the first active material. The substrate is typically electroconductive. An example of the substrate is a carbonaceous material. Examples of the carbonaceous material include carbon nanotubes (e.g., a single-walled carbon nanotube and a multi-walled carbon nanotube), carbon black, Ketjen Black, carbon black Super P, and graphene. When such carbonaceous material is used as the substrate, electron transfer can be easily performed, and thus a redox reaction of the first active material can be satisfactorily performed. For example, when anthraquinone or polyanthraquinone is used as the first active material, the average pore diameter of the substrate is preferably from 2 nm to 50 nm, more preferably from 2 nm to 20 nm, still more preferably from 3 nm to 10 nm. When the average pore diameter is excessively small, the first active material cannot be supported inside the substrate in some cases. When the average pore diameter is excessively large, the first active material escapes during the operation of the function electrode in some cases. The average pore diameter of the substrate may vary depending on the first active material. For example, when naphthoquinone is used as the first active material, the average pore diameter is preferably a size that is about 2/3 of the above-mentioned average pore diameter. The average pore diameter may be calculated, for example, by using BJH analysis in a nitrogen gas adsorption method.

The content of the first active material in the function electrode may be, for example, from 10 mass% to 70 mass%, or may be, for example, from 20 mass% to 50 mass% with respect to the total mass of the function electrode. When the content of the first active material falls within such ranges, satisfactory gas capture and release performance can be achieved.

### B-1-2. Counter Electrode

A counter electrode can function as an electron source for the reduction of the first active material, and can also function as an electron acceptor at the time of the oxidation of the first active material. That is, the counter electrode plays a subsidiary role for satisfactory functioning of the function electrode. The counter electrode contains a second active material. Any appropriate substance may be used as the second active material as long as electron transfer can be satisfactorily performed between the substance and the function electrode. Examples of the second active material include polyvinylferrocene and poly(3-(4-fluorophenyl))thiophene. The counter electrode is subjected to the highest potential, and is hence required to have resistance to oxidation with oxygen in the gas mixture. A carbon material may be used to provide the second active material as long as the resistance to oxidation is obtained.

The counter electrode may further contain a substrate. The substrate is as described in the section B-1-1 for the function electrode. In one embodiment, the second active material is dispersed in the substrate. When the second active material is dispersed in the substrate, excellent electron conductivity can be achieved in the electrode.

The counter electrode may further contain an ionic liquid. When the counter electrode contains the ionic liquid, the counter electrode can sterically function, and an increase in electron transfer capacity can be achieved. Any appropriate ionic liquid may be used as the ionic liquid depending on, for example, the purposes and the configuration of the electrochemical device. The ionic liquid may typically contain an anionic component and a cationic component. Examples of the anionic component of the ionic liquid include a halide, sulfuric acid, sulfonic acid, carbonic acid, bicarbonic acid, phosphoric acid, nitric acid, nitric acid, acetic acid, PF₆⁻, BF₄⁻, triflate, nonaflate, bis(triflyl)amide, trifluoroacetic acid, heptafluorobutanoic acid, a haloaluminate, triazolide, and an amino acid derivative (e.g., proline in which a proton on a nitrogen atom is removed). Examples of the cationic component of the ionic liquid include imidazolium, pyridinium, pyrrolidinium, phosphonium, ammonium, sulfonium, thiazolium, pyrazolium, piperidinium, triazolium, oxazolium, guanadinium, and a dialkylmorpholinium. The ionic liquid may be, for example, 1-butyl-3-methylimidazolium tetrafluoroborate ([Bmim]⁺[BF₄]⁻). When the kind of the gas to be separated and captured is carbon dioxide, a non-aqueous ionic liquid is preferably used because water may be electrolyzed in relation to a potential window.

The content of the second active material in the counter electrode may be, for example, from 10 mass% to 90 mass%, or may be, for example, from 30 mass% to 70 mass% with respect to the total mass of the counter electrode. When the content of the second active material falls within such ranges, the usage amount of an electrolytic solution (ionic liquid) can be reduced, and the second active material in the counter electrode can be effectively utilized.

When the counter electrode contains the ionic liquid, the content thereof may be, for example, from 10 mass% to 90 mass%, or may be, for example, from 30 mass% to 70 mass% with respect to the total mass of the counter electrode. When the content of the ionic liquid falls within such ranges, the electrolytic solution (ionic liquid) can be continuously supplied to the function electrode for a long period of time.

### B-1-3. Support

In one embodiment of the present invention, the function electrode **50** and the counter electrode **60** are supported by a support **80.** The support **80** includes: an outer peripheral wall **10;** and partition walls **40** that are arranged inside the outer peripheral wall **10** and define a plurality of cells **30, 30,** ··· each extending from a first end surface **20a** to a second end surface **20b.**

The plurality of cells **30, 30,** ··· include a first cell **30a** and a second cell **30b.** The surface of the partition wall **40** that defines the first cell **30a** has formed thereon the function electrode **50** containing the first active material. With such configuration, while sufficient strength is ensured, a contact area between the gas mixture (substantially, the gas to be separated and captured) at a predetermined flow rate and the function electrode can be significantly increased. As a result, the predetermined gas (e.g., carbon dioxide) can be separated and captured with significantly high efficiency. Further, the predetermined gas (e.g., carbon dioxide) can be separated and captured efficiently in a small-scale facility, and energy required for the separation and capture of the gas can be significantly reduced. As described above, according to one embodiment of the present invention, when a so-called honeycomb structure as described above is adopted as the basic structure of the electrochemical device, the gas can be separated and captured efficiently in an energy saving manner in a small-scale facility.

A gas flow passage **70** is formed in a center portion of a cross section of the first cell **30a** in the direction perpendicular to the cell extending direction (i.e., a portion in which the function electrode **50** is not formed). The function electrode **50** may be formed on the entire surface of the partition wall **40** (i.e., so as to surround the gas flow passage **70**) as in the illustrated example, or may be formed on part of the surface of the partition wall. In consideration of gas separation and capture efficiency, it is preferred that the function electrode **50** be formed on the entire surface of the partition wall **40.**

The thickness of the function electrode **50** may be, for example, from 20 um to 300 µm, or may be, for example, from 100 um to 200 um. When the thickness of the function electrode falls within such ranges, while satisfactory gas capture and release performance is maintained, a desired gas flow passage can be ensured.

The function electrode **50** may be formed, for example, by subjecting a function electrode-forming material containing the first active material, the substrate, and a binder for binding to dry application under reduced pressure on the surface of the partition wall, followed by heat treatment.

The counter electrode **60** containing the second active material is arranged inside the second cell **30b.** The second cell **30b** is typically filled with the counter electrode **60.** When the second cell **30b** is filled with the counter electrode, the electrolytic solution (ionic liquid) can be continuously supplied to the function electrode for a long period of time.

The counter electrode **60** may be formed, for example, by arranging a counter electrode-forming material containing the second active material, the substrate, preferably the ionic liquid, and as required a solvent or a dispersion medium in the cell (typically, by filling the cell with the counter electrode-forming material).

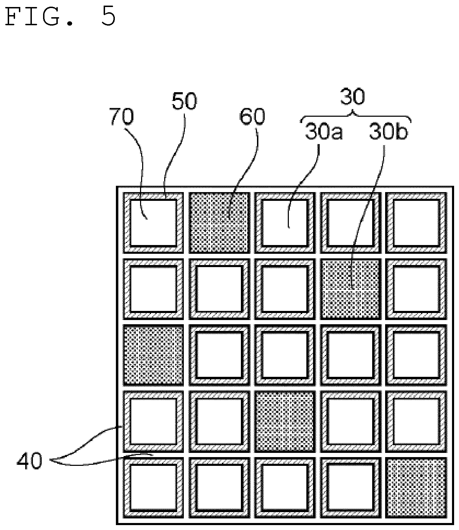

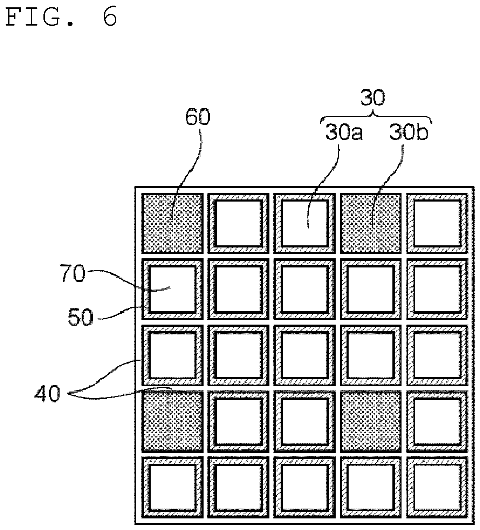

The arrangement pattern of the first cell **30a** and the second cell **30b** may be appropriately set depending on the purposes as long as the effect according to the embodiment of the present invention can be obtained. In the example illustrated in each of FIG. **2** to FIG. **4****,** the first cell **30a** and the second cell **30b** are arranged alternately (i.e., in a checker pattern). With such configuration, the counter electrode can satisfactorily function, and hence an electrochemical reaction in the function electrode can be satisfactorily performed. In addition, the ratio of the second cell **30b** in the plurality of cells **30, 30,** ··· may be reduced as long as the number (ratio) of counter electrodes each capable of functioning can be ensured. That is, the ratio of the first cell **30a** (substantially, the function electrode **50** and the gas flow passage **70**) may be increased. For example, in each of examples illustrated in FIG. **5** to FIG. **8****,** the second cells **30b** are arranged so as not to be adjacent to each other. In this case, the first cells **30a** may be arranged so as to be adjacent to each other. Herein, the phrase "not to be adjacent to each other" refers to the case in which two cells share none of the sides and vertices of the partition walls that define the respective cells. With such configuration, the contact area between the gas mixture (substantially, the gas to be separated and captured) at a predetermined flow rate and the function electrode can be further increased, and as a result, gas separation and capture performance can be further improved. In this case, the first cell **30a** may typically share the partition wall **40** with at least one second cell **30b.** For example, the second cell **30b** may be arranged as illustrated in each of FIG. **5** to FIG. **8****.**

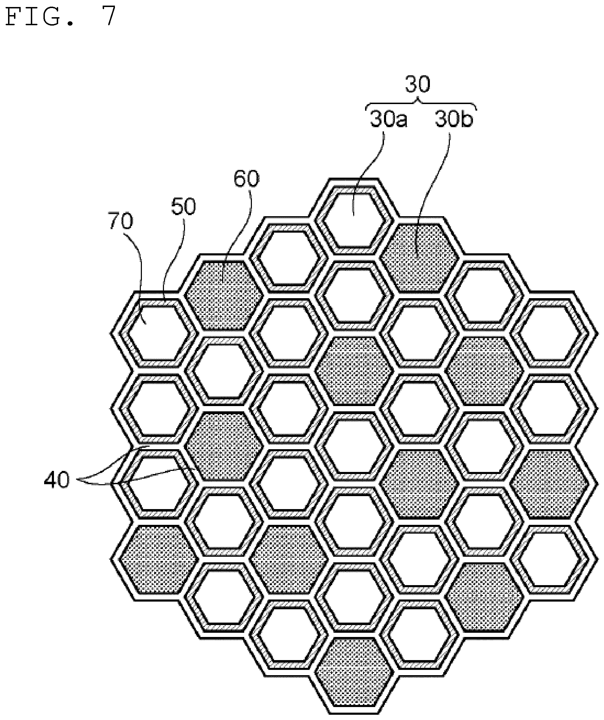

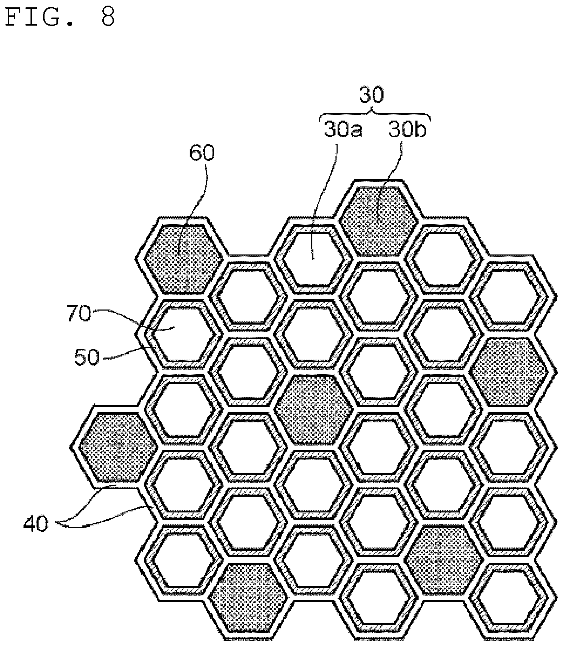

The cells **30, 30,** ··· each have any appropriate sectional shape in the direction perpendicular to the cell extending direction. In each of the examples illustrated in FIG. **2** to FIG. **6****,** the partition walls **40** that define cells are perpendicular to each other, to thereby define cells each having a quadrangular (square in each of the illustrated examples) sectional shape except for a portion brought into contact with the outer peripheral wall **10.** In one embodiment, the sectional shapes of the cells are the same quadrangle (e.g., square, rectangle, parallelogram, or rhombus). Other than a square, the sectional shapes of the cells may each be set to a shape, such as a circle, an ellipse, a triangle, a pentagon, a hexagon, or a higher polygon. For example, in each of the examples illustrated in FIG. **7** and FIG. **8****,** the sectional shapes of the cells are each a hexagon. With such configuration, the following advantages are obtained. The formation of the function electrode and the counter electrode is facilitated. Besides, a pressure loss at the time when the gas is caused to flow is small, and separation and capture performance is excellent.

A cell density in the direction perpendicular to the cell extending direction (i.e., the number of the cells **30, 30,** ... per unit area) may be appropriately set depending on the purposes. The cell density may be, for example, from 4 cells/cm² to 320 cells/cm². When the cell density falls within such range, the contact area between the gas mixture (substantially, the gas to be separated and captured) at a predetermined flow rate and the function electrode can be significantly increased. As a result, the predetermined gas (e.g., carbon dioxide) can be separated and captured with significantly high efficiency. For example, while a flat plate-shaped gas separation device in which a function electrode and a counter electrode are opposed to each other through intermediation of a separator has a mounting density of about 0.2 m²/L, the electrochemical device having the above-mentioned configuration can ensure a mounting density of about 2 m²/L (about 10 times). As a result, the predetermined gas (e.g., carbon dioxide) can be separated and captured efficiently in a small-scale facility, and energy required for the separation and capture of the gas can be significantly reduced. Further, when such mounting density is ensured, Direct Air Capture (DAC) can be performed.

The support **80** (the outer peripheral wall **10** and the partition wall **40**) is typically formed of a porous body including an insulating ceramic. The insulating ceramic typically includes cordierite, alumina, or silicon carbide and silicon (hereinafter sometimes referred to as "silicon carbide-silicon composite material"). The ceramic includes cordierite, alumina, silicon carbide, and silicon at, for example, 90 mass% or more, or for example, 95 mass% or more, in total. With such configuration, the volume resistivities of the outer peripheral wall and the partition wall at 400°C can be sufficiently increased, and thus a leakage current due to electron conductivity can be suppressed. Accordingly, only a desired electrochemical reaction can be satisfactorily performed over the entirety of the function electrode **50** and the counter electrode **60.** The ceramic may include any substance other than the silicon carbide-silicon composite material. An example of such substance is strontium.

The silicon carbide-silicon composite material typically includes silicon carbide particles each serving as an aggregate and silicon serving as a binder for binding the silicon carbide particles. In the silicon carbide-silicon composite material, for example, a plurality of silicon carbide particles are bound by silicon so as to form pores (voids) between the silicon carbide particles. That is, the partition wall **40** and the outer peripheral wall **10** each including the silicon carbide-silicon composite material may be, for example, a porous body.

The content ratio of silicon in the silicon carbide-silicon composite material is preferably from 10 mass% to 40 mass%, more preferably from 15 mass% to 35 mass%. When the content ratio of silicon is excessively small, the strength of the outer peripheral wall and the partition wall is insufficient in some cases. When the content ratio of silicon is excessively large, the outer peripheral wall and the partition wall cannot retain their shapes at the time of firing in some cases.

The average particle diameter of the silicon carbide particles is preferably from 3 um to 50 µm, more preferably from 3 um to 40 µm, still more preferably from 10 um to 35 um. When the average particle diameter of the silicon carbide particles falls within such ranges, the volume resistivities of the outer peripheral wall and the partition wall can be set to fall within an appropriate range as described above. When the average particle diameter of the silicon carbide particles is excessively large, a forming die may be clogged with a raw material at the time of the forming of the outer peripheral wall and the partition wall. The average particle diameter of the silicon carbide particles may be measured, for example, by laser diffractometry.

The average pore diameter of the support **80** (the outer peripheral wall **10** and the partition wall **40**) is preferably from 2 um to 20 µm, more preferably from 10 um to 20 um. When the average pore diameter of the outer peripheral wall and the partition wall falls within such ranges, satisfactory impregnation with the ionic liquid can be achieved. When the average pore diameter is excessively large, the carbonaceous material in the counter electrode or the function electrode may flow into an inside of the partition wall, and as a result, an internal short circuit may occur. The average pore diameter may be measured, for example, with a mercury porosimeter.

The porosity of the support **80** (the outer peripheral wall **10** and the partition wall **40**) is preferably from 15% to 60%, more preferably from 30% to 45%. When the porosity is excessively low, the deformation of the outer peripheral wall and the partition wall may be increased at the time of firing. When the porosity is excessively high, the strength of the outer peripheral wall and the partition wall may be insufficient. The porosity may be measured, for example, with a mercury porosimeter.

The thickness of the partition wall **40** may be appropriately set depending on the purposes. The thickness of the partition wall **40** is, for example, from 50 um to 1.0 mm, or may be, for example, from 70 um to 600 um. When the thickness of the partition wall falls within such ranges, the electrochemical device can have sufficient mechanical strength, and can also have a sufficient opening area (the total area of the cells in a cross section), and thus gas separation and capture efficiency can be remarkably improved.

The density of the partition wall **40** may be appropriately set depending on the purposes. The density of the partition wall **40** may be, for example, from 0.5 g/cm³ to 5.0 g/cm³. When the density of the partition wall falls within such range, weight saving of the electrochemical device can be achieved, and sufficient mechanical strength thereof can also be achieved. The density may be measured, for example, by the Archimedes method.

In one embodiment of the present invention, the thickness of the outer peripheral wall **10** is larger than the thickness of the partition wall **40.** With such configuration, the fracture, breakage, cracks, and the like of the outer peripheral wall due to external force can be suppressed. The thickness of the outer peripheral wall **10** is, for example, from 0.1 mm to 5 mm, or may be, for example, from 0.3 mm to 2 mm.

In one embodiment of the present invention, the voids of the partition wall **40** and the outer peripheral wall **10** are each impregnated with the ionic liquid. With such configuration, the partition wall and the outer peripheral wall (particularly, the partition wall) can each satisfactorily function as a separator between the function electrode and the counter electrode. Further, through the impregnation with the ionic liquid, the electron conductivity is reduced, and only a desired electrochemical reaction can be efficiently performed. In one embodiment, the ionic liquid in the function electrode is the same as the ionic liquid in each of the outer peripheral wall and the partition wall (particularly, the partition wall). With such configuration, the production of the electrochemical device is simplified and facilitated, and adverse effects on the electrochemical reaction of the function electrode can be prevented.

The shape of the electrochemical device may be appropriately designed depending on the purposes. While the electrochemical device **100** of the illustrated example has a cylindrical shape (its sectional shape in the direction perpendicular to the cell extending direction is a circle), the electrochemical device may have a columnar shape whose sectional shape is, for example, an ellipse or a polygon (e.g., a quadrangle, a pentagon, a hexagon, or an octagon). The length of the electrochemical device may be appropriately set depending on the purposes. The length of the electrochemical device may be, for example, from 5 mm to 500 mm. The diameter of the electrochemical device may be appropriately set depending on the purposes. The diameter of the electrochemical device may be, for example, from 20 mm to 500 mm. When the sectional shape of the electrochemical device is not a circle, the diameter of the maximum inscribed circle that is inscribed in the sectional shape (e.g., a polygon) of the electrochemical device may be used as the diameter of the electrochemical device. The aspect ratio of the electrochemical device (diameter:length) is, for example, 1:12 or less, or for example, 1:5 or less, or for example, 1:1 or less. When the aspect ratio falls within such ranges, current collection resistance can be set to fall within an appropriate range.

In the foregoing, the configuration of the electrochemical device **100** has been described by conveniently illustrating one electrochemical device **100.** In one embodiment of the present invention, however, a plurality of electrochemical devices **100** are accommodated in the reaction vessel of each of the adsorption columns **11.** A region of the adsorption column **11** in which the plurality of electrochemical devices **100** are arranged is a gas adsorption region. The plurality of electrochemical devices **100** accommodated in the reaction vessel may be arranged next to each other in the cell extending direction so that the gas flow passages **70** thereof communicate to each other. In addition, an array of the plurality of electrochemical devices **100** arranged in the cell extending direction may be arranged in a plurality of numbers in the direction perpendicular to the cell extending direction. In addition, the electrochemical device **100** accommodated in the reaction vessel may be arranged so that the cell extending direction is parallel to a vertical direction.

Although not shown, in one embodiment of the present invention, the function electrode **50** and the counter electrode **60** of the electrochemical device **100** are electrically connected to a power source. The power source can apply a voltage to the function electrode **50.** The power source includes a constant voltage source and a polarity inversion circuit capable of inverting the polarity of the voltage applied to the function electrode **50.**

While, in the above-mentioned one embodiment of the present invention, the electrochemical device **100** includes the support **80** including the plurality of cells **30,** and the support **80** supports the function electrode **50** and the counter electrode **60,** the electrochemical device is not limited thereto. For example, the electrochemical device may include a plurality of flat plate-shaped gas separation devices arranged in a direction parallel to the thickness direction of each of the gas separation devices so as to be spaced apart from each other, the gas separation devices each including the function electrode and the counter electrode opposed to each other through intermediation of a separator. The gas separation device may have a quadrangular shape that is longer in a predetermined direction as seen from the thickness direction. An example of such electrochemical device is an electrochemical cell described in JP 2018-533470 A. When the plurality of electrochemical devices each including the gas separation device are accommodated in the reaction vessel of each of the adsorption columns **11,** the plurality of electrochemical devices may be arranged in a lengthwise direction of the gas separation device so that spaces between the gas separation devices adjacent to each other communicate to each other. In addition, an array of the plurality of electrochemical devices arranged in the lengthwise direction of the gas separation device may be arranged in a plurality of numbers in a direction intersecting with the lengthwise direction of the gas separation device.

### B-1-4. Electrochemical Reaction

The outline of the operation of the electrochemical device **100** is described. For example, a case in which the gas to be separated and captured is carbon dioxide, the first active material of the function electrode **50** includes anthraquinone, and the second active material of the counter electrode **60** includes polyvinylferrocene is described. Anthraquinone of the function electrode **50** can be reduced when a positive voltage is applied thereto as an adsorption voltage in a charge mode (the function electrode is a negative electrode).

In this case, when the gas mixture including carbon dioxide is caused to flow through the gas flow passage **70** of the electrochemical device, the following reaction (1) occurs between anthraquinone of the function electrode **50** in a reduced state and carbon dioxide, and carbon dioxide is trapped by anthraquinone. In this manner, carbon dioxide can be captured.

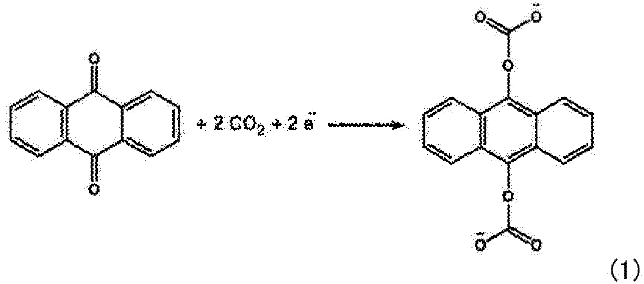

At this time, polyvinylferrocene of the counter electrode **60** can be oxidized. That is, polyvinylferrocene can function as an electron source for the reduction of anthraquinone in the charge mode.

In addition, anthraquinone of the function electrode **50** can be oxidized when a negative voltage having reverse polarity to the adsorption voltage is applied thereto as a release voltage in a discharge mode (the function electrode is a positive electrode).

In this case, when anthraquinone having trapped carbon dioxide is oxidized in the function electrode **50,** the following reaction (2) occurs, and carbon dioxide having been trapped by anthraquinone is unbound from anthraquinone. In this manner, carbon dioxide can be released from the function electrode **50** to the gas flow passage **70.**

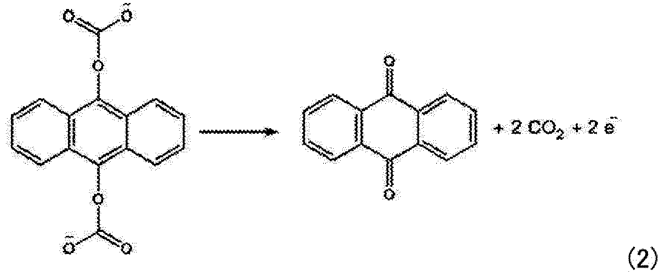

At this time, polyvinylferrocene of the counter electrode **60** can be reduced. That is, polyvinylferrocene can function as an electron acceptor at the time of the oxidation of anthraquinone in the discharge mode.

As described above, through switching of the polarity of the function electrode (and inevitably the counter electrode), the electrochemical device (substantially, the function electrode) can capture (trap, adsorb) and release carbon dioxide. In particular, through utilization of anthraquinone in a reduced state in the charge mode, carbon dioxide can be separated and captured (trapped) from the gas mixture. As described above, the electrochemical device **100** can capture carbon dioxide.

### C. Gas Supply Unit

As illustrated in FIG. **1****,** the gas supply unit **21** can supply the gas mixture (e.g., exhaust gas) including the predetermined gas (e.g., carbon dioxide) to each of the adsorption columns **11** (the first adsorption column **11a,** the second adsorption column **11b**, and the third adsorption column **11c**). In one embodiment of the present invention, the gas supply unit **21** includes a gas supply line **21a,** a first supply valve **21b,** a second supply valve **21c,** a third supply valve **21d,** and a blower **21e.**

The gas supply line **21a** is a pipe through which the gas mixture including the predetermined gas can pass. A downstream end portion of the gas supply line **21a** in the passage direction of the gas mixture is branched in accordance with the plurality of adsorption columns **11** to be connected to each of the adsorption columns **11.** In one embodiment of the present invention, the branched downstream end portion of the gas supply line **21a** is connected to a lower end portion of each of the adsorption columns **11.** Although not shown, an upstream end portion of the gas supply line **21a** is connected to a facility (e.g., a plant or a thermal power station) in which the gas mixture including the predetermined gas is generated.

The first supply valve **21b,** the second supply valve **21c,** and the third supply valve **21d** can each open and close the gas supply line **21a,** and are each, for example, an electromagnetic valve. The first supply valve **21b** is arranged in a branched portion of the gas supply line **21a** connected to the first adsorption column **11a.** The second supply valve **21c** is arranged in a branched portion of the gas supply line **21a** connected to the second adsorption column **11b.** The third supply valve **21d** is arranged in a branched portion of the gas supply line **21a** connected to the third adsorption column **11c.**

The blower **21e** can send the gas mixture passing through the gas supply line **21a** to each of the adsorption columns **11.** The blower **21e** is arranged in the gas supply line **21a.** The blower **21e** is positioned on an upstream side of each of the branched portions of the gas supply line **21a** in the passage direction of the gas mixture in the gas supply line **21a.**

### D. Discharge Unit

The discharge unit **31** can discharge the gas mixture, which has passed through each of the adsorption columns **11** (the first adsorption column **11a,** the second adsorption column **11b,** and the third adsorption column **11c**) and from which the predetermined gas (e.g., carbon dioxide) has been removed, from each of the adsorption columns **11.** In one embodiment of the present invention, the discharge unit **31** includes a discharge line **31a,** a first discharge valve **31b,** a second discharge valve **31c,** and a third discharge valve **31d.**

The discharge line **31a** is a pipe through which the gas mixture from which the predetermined gas has been removed can pass. An upstream end portion of the discharge line **31a** in the passage direction of the gas mixture is branched in accordance with the plurality of adsorption columns **11** to be connected to each of the adsorption columns **11.** In one embodiment of the present invention, the branched upstream end portion of the discharge line **31a** is connected to an upper end portion of each of the adsorption columns **11.** Although not shown, a downstream end portion of the discharge line **31a** is opened to the atmosphere.

The first discharge valve **31b,** the second discharge valve **31c,** and the third discharge valve **31d** can each open and close the discharge line **31a,** and are each, for example, an electromagnetic valve. The first discharge valve **31b** is arranged in a branched portion of the discharge line **31a** connected to the first adsorption column **11a.** The second discharge valve **31c** is arranged in a branched portion of the discharge line **31a** connected to the second adsorption column **11b.** The third discharge valve **31d** is arranged in a branched portion of the discharge line **31a** connected to the third adsorption column **11c.**

### E. Gas Capture Unit

The gas capture unit **41** can capture the predetermined gas (e.g., carbon dioxide), which has been adsorbed to each of the adsorption columns **11** (the first adsorption column **11a,** the second adsorption column **11b,** and the third adsorption column **11c**) once, and is then released from each of the adsorption columns **11** (the first adsorption column **11a,** the second adsorption column **11b,** and the third adsorption column **11c**). In one embodiment of the present invention, the gas capture unit **41** includes a gas capture line **41a,** a first capture valve **41b,** a second capture valve **41c,** a third capture valve **41d,** and a pump **41e.**

The gas capture line **41a** is a pipe through which the predetermined gas can pass. An upstream end portion of the gas capture line **41a** in the passage direction of the predetermined gas is branched in accordance with the plurality of adsorption columns **11** to be connected to each of the adsorption columns **11.** In one embodiment of the present invention, the branched upstream end portion of the gas capture line **41a** is connected to a lower end portion of each of the adsorption columns **11.** Although not shown, a downstream end portion of the gas capture line **41a** is connected to a storage facility of the predetermined gas.

The first capture valve **41b,** the second capture valve **41c,** and the third capture valve **41d** can each open and close the gas capture line **41a,** and are each, for example, an electromagnetic valve. The first capture valve **41b** is arranged in a branched portion of the gas capture line **41a** connected to the first adsorption column **11a.** The second capture valve **41c** is arranged in a branched portion of the gas capture line **41a** connected to the second adsorption column **11b.** The third capture valve **41d** is arranged in a branched portion of the gas capture line **41a** connected to the third adsorption column **11c.**

The pump **41e** can send the predetermined gas passing through the gas capture line **41a** to the storage facility. The pump **41e** is, for example, a vacuum pump. The pump **41e** is arranged in the gas capture line **41a.** The pump **41e** is positioned on a downstream side of each of the branched portions of the gas capture line **41a** in the passage direction of the predetermined gas in the gas capture line **41a.**

### F. First Connection Unit

The first connection unit **61** can supply the gas mixture having passed through the first adsorption column **11a** (first adsorption column-passed gas) to the second adsorption column **11b.** In one embodiment of the present invention, the first connection unit **61** includes a first connection line **61a** and a first connection valve **61b.**

The first connection line **61a** is a pipe through which the gas mixture having passed through the first adsorption column **11a** can pass. The first connection line **61a** connects the first adsorption column **11a** to the second adsorption column **11b.** In one embodiment of the present invention, an upstream end portion of the first connection line **61a** in a passage direction of the first adsorption column-passed gas is connected to an upper end portion of the first adsorption column **11a.** A downstream end portion of the first connection line **61a** in the passage direction of the first adsorption column-passed gas is connected to a lower end portion of the second adsorption column **11b.**

The first connection valve **61b** can open and close the first connection line **61a,** and is, for example, an electromagnetic valve. The first connection valve **61b** is arranged in the first connection line **61a.**

### G. Second Connection Unit

The second connection unit **71** can supply the gas mixture having passed through the second adsorption column **11b** (second adsorption column-passed gas) to the third adsorption column **11c.** In one embodiment of the present invention, the second connection unit **71** includes a second connection line **71a** and a second connection valve **71b.**

The second connection line **71a** is a pipe through which the gas mixture having passed through the second adsorption column **11b** can pass. The second connection line **71a** connects the second adsorption column **11b** to the third adsorption column **11c.** In one embodiment of the present invention, an upstream end portion of the second connection line **71a** in a passage direction of the second adsorption column-passed gas is connected to an upper end portion of the second adsorption column **11b.** A downstream end portion of the second connection line **71a** in the passage direction of the second adsorption column-passed gas is connected to a lower end portion of the third adsorption column **11c.**

The second connection valve **71b** can open and close the second connection line **71a,** and is, for example, an electromagnetic valve. The second connection valve **71b** is arranged in the second connection line **71a.**

### H. Third Connection Unit

The third connection unit **81** can supply the gas mixture having passed through the third adsorption column **11c** (third adsorption column-passed gas) to the first adsorption column **11a.** In one embodiment of the present invention, the third connection unit **81** includes a third connection line **81a** and a third connection valve **81b.**

The third connection line **81a** is a pipe through which the gas mixture having passed through the third adsorption column **11c** can pass. The third connection line **81a** connects the third adsorption column **11c** to the first adsorption column **11a.** In one embodiment of the present invention, an upstream end portion of the third connection line **81a** in a passage direction of the third adsorption column-passed gas is connected to an upper end portion of the third adsorption column **11c.** A downstream end portion of the third connection line **81a** in the passage direction of the third adsorption column-passed gas is connected to a lower end portion of the first adsorption column **11a.**

The third connection valve **81b** can open and close the third connection line **81a,** and is, for example, an electromagnetic valve. The third connection valve **81b** is arranged in the third connection line **81a.**

### I. Control Unit

The control unit **51** can control the operation of the gas adsorption system **110.** The control unit **51** includes, for example, a central processing unit (CPU), ROM, and RAM. In one embodiment of the present invention, the control unit **51** is electrically connected to each of the first supply valve **21b,** the second supply valve **21c,** the third supply valve **21d,** the first discharge valve **31b,** the second discharge valve **31c,** the third discharge valve **31d,** the first capture valve **41b,** the second capture valve **41c,** the third capture valve **41d,** the first connection valve **61b,** the second connection valve **71b,** the third connection valve **81b,** the blower **21e,** and the pump **41e.** In addition, although not shown, the control unit **51** is electrically connected to the power source connected to the function electrode **50** and the counter electrode **60.**

A method of operating a gas adsorption system is described below.

### J. Method of Operating Gas Adsorption System

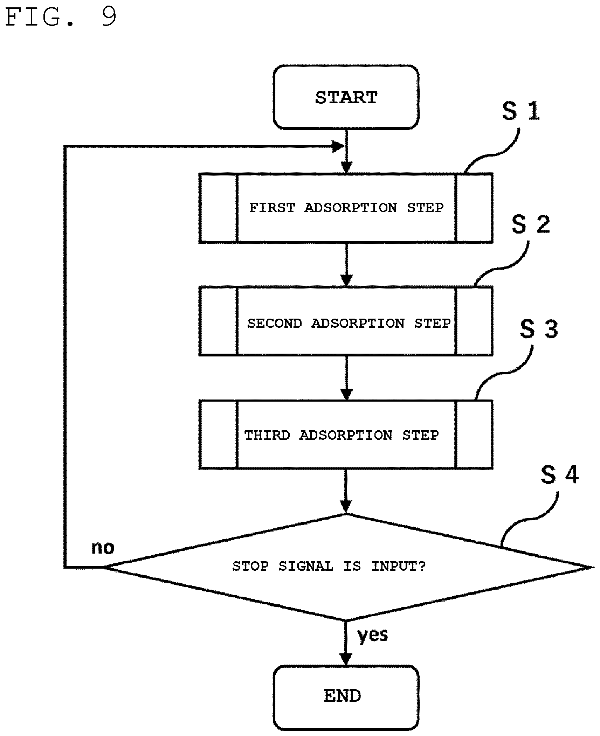

A method of operating a gas adsorption system according to one embodiment of the present invention is a method of operating the gas adsorption system **110** described above. FIG. **9** is a process flow chart for illustrating a method of operating a gas adsorption system of one embodiment of the present invention.

The method of operating a gas adsorption system according to one embodiment of the present invention includes: a first adsorption step (**S1**) of supplying the predetermined gas (e.g., carbon dioxide) to the first adsorption column **11a,** and supplying the gas having passed through the first adsorption column **11a** to the second adsorption column **11b,** to thereby cause the predetermined gas to be adsorbed to each of the first adsorption column **11a** and the second adsorption column **11b;** and a second adsorption step (**S2**) of, while stopping the supply of the predetermined gas to the first adsorption column **11a,** supplying the predetermined gas to the second adsorption column **11b,** and supplying the gas having passed through the second adsorption column **11b** to the third adsorption column **11c,** to thereby cause the predetermined gas to be adsorbed to each of the second adsorption column **11b** and the third adsorption column **11c.** According to such method, in the first adsorption step, the predetermined gas can be sequentially adsorbed to the first adsorption column **11a** and the second adsorption column **11b.** Thus, even when the predetermined gas slips from the first adsorption column **11a,** the predetermined gas having slipped from the first adsorption column **11a** can be adsorbed to the second adsorption column **11b.** In addition, in the second adsorption step, the third adsorption column **11c** is used in place of the first adsorption column **11a,** and the predetermined gas can be sequentially adsorbed to the second adsorption column **11b** and the third adsorption column **11c.** Accordingly, even when the predetermined gas slips from the second adsorption column **11b,** the predetermined gas having slipped from the second adsorption column **11b** can be adsorbed to the third adsorption column **11c.** As a result, the run-up zone in the gas adsorption region of each of the first adsorption column **11a** and the second adsorption column **11b** can be shortened, and the gas adsorption capacity of each of the first adsorption column **11a** and the second adsorption column **11b** can be efficiently utilized. In addition, the gas adsorption capacity of each of the first adsorption column **11a** and the second adsorption column **11b** can also be fully used without arranging the run-up zone in the gas adsorption region of each of the first adsorption column **11a** and the second adsorption column **11b.** As a result, the predetermined gas can be efficiently separated and captured from the gas mixture. When the gas adsorption system **110** includes three or more adsorption columns **11,** the adsorption step may be performed in the three or more adsorption columns **11** by causing the gas mixture including the predetermined gas to sequentially pass through the three or more adsorption columns **11,** but from the viewpoint of a pressure loss, the adsorption step is preferably performed in two adsorption columns **11** as in the method described above.

In addition, the method of operating a gas adsorption system according to one embodiment of the present invention further includes: a first release step of releasing the predetermined gas, which has been adsorbed to the first adsorption column **11a,** from the first adsorption column **11a** after the end of the first adsorption step and before the end of the second adsorption step; and a third adsorption step (**S3**) of, while stopping the supply of the predetermined gas to the second adsorption column **11b,** supplying the predetermined gas to the third adsorption column **11c,** and supplying the gas having passed through the third adsorption column **11c** to the first adsorption column **11a,** to thereby cause the predetermined gas to be adsorbed to each of the first adsorption column **11a** and the third adsorption column **11c.** According to such method, the predetermined gas having been adsorbed to the first adsorption column **11a** is released from the first adsorption column **11a** after the end of the first adsorption step and before the end of the second adsorption step. Accordingly, in the third adsorption step, the first adsorption column **11a** can be utilized, and the predetermined gas can be sequentially adsorbed to the third adsorption column **11c** and the first adsorption column **11a.** As a result, even when the predetermined gas slips from the third adsorption column **11c,** the predetermined gas having slipped from the third adsorption column **11c** can be adsorbed to the first adsorption column **11a.** Thus, the run-up zone in the gas adsorption region of each of the first adsorption column **11a,** the second adsorption column **11b,** and the third adsorption column **11c** can be shortened, and the gas adsorption capacity of each of the first adsorption column **11a,** the second adsorption column **11b,** and the third adsorption column **11c** can be efficiently utilized. In addition, the gas adsorption capacity of each of the first adsorption column **11a,** the second adsorption column **11b,** and the third adsorption column **11c** can also be fully used without arranging the run-up zone in the gas adsorption region of each of the first adsorption column **11a,** the second adsorption column **11b,** and the third adsorption column **11c.** As a result, the predetermined gas can be efficiently separated and captured from the gas mixture.

In addition, the method of operating a gas adsorption system according to one embodiment of the present invention further includes: sequentially repeating the first adsorption step (**S1**), the second adsorption step (**S2**), and the third adsorption step (**S3**); a second release step of releasing the predetermined gas, which has been adsorbed to the second adsorption column **11b,** from the second adsorption column **11b** after the end of the second adsorption step and before the end of the third adsorption step; and a third release step of releasing the predetermined gas, which has been adsorbed to the third adsorption column **11c,** from the third adsorption column **11c** after the end of the third adsorption step and before the end of the repeated first adsorption step. According to such method, the first adsorption step (**S1**), the second adsorption step (**S2**), and the third adsorption step (**S3**) can be smoothly repeated through use of the first adsorption column **11a,** the second adsorption column **11b,** and the third adsorption column **11c.** Thus, the predetermined gas can be efficiently separated and captured from the gas mixture.

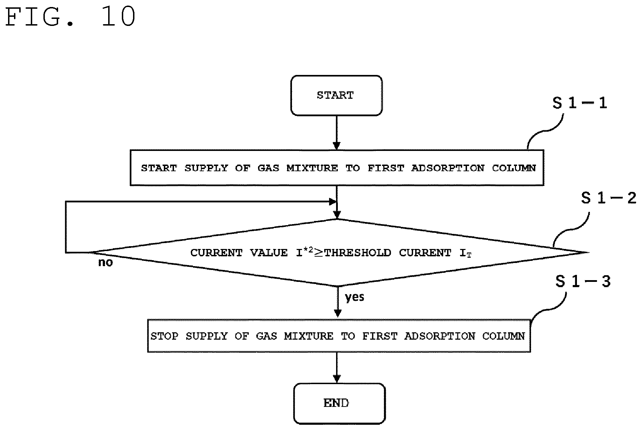

In the method of operating a gas adsorption system according to one embodiment of the present invention, first, the first adsorption step (**S1**) is performed. FIG. **10** is a process flow chart for illustrating the first adsorption step of FIG. **9****.**

In the first adsorption step, the gas mixture (e.g., exhaust gas) including the predetermined gas is supplied to the first adsorption column **11a.** More specifically, after the application of an adsorption voltage to each of the function electrode **50** of the first adsorption column **11a** and the function electrode **50** of the second adsorption column **11b** is started, the supply of the gas mixture (e.g., exhaust gas) including the predetermined gas to the first adsorption column **11a** is started (**S1-1)**.

The control unit **51** starts the application of the adsorption voltage to each of the function electrode **50** of the first adsorption column **11a** and the function electrode **50** of the second adsorption column **11b** by controlling the power source (not shown). In one embodiment of the present invention, the adsorption voltage to the function electrode **50** of the first adsorption column **11a** and the adsorption voltage to the function electrode **50** of the second adsorption column **11b** are the same, and the adsorption voltages are each, for example, from 1.6 V to 2.0 V. The adsorption voltage to the function electrode **50** of the first adsorption column **11a** and the adsorption voltage to the function electrode **50** of the second adsorption column **11b** may be different from each other.

Next, the control unit **51** brings each of the first supply valve **21b,** the first connection valve **61b,** and the second discharge valve **31c** into an open state and the other valves into a closed state, and drives the blower **21e.** When the blower **21e** is driven, the gas mixture (e.g., exhaust gas) including the predetermined gas is supplied to the first adsorption column **11a** through the gas supply line **21a.** The gas mixture supplied to the first adsorption column **11a** passes through the first adsorption column **11a,** and is discharged to the first connection line **61a.** When the gas mixture passes through the first adsorption column **11a,** at least part of the predetermined gas in the gas mixture is adsorbed to the function electrode **50** of the first adsorption column **11a.** The gas mixture having passed through the first adsorption column **11a** (first adsorption column-passed gas) is supplied to the second adsorption column **11b** through the first connection line **61a.** The gas mixture supplied to the second adsorption column **11b** passes through the second adsorption column **11b,** and is discharged to the discharge line **31a.** When the gas mixture passes through the second adsorption column **11b,** the predetermined gas in the gas mixture is adsorbed to the function electrode **50** of the second adsorption column **11b.**

Next, until the first adsorption column can no longer fully remove a gas to be adsorbed from the gas mixture and a current value I*² flowing through the electrochemical device of the second adsorption column becomes equal to or more than a preset threshold current I_{T}, the supply of the gas mixture to the first adsorption column **11a** is maintained, and the application of the adsorption voltage to each of the function electrode **50** of the first adsorption column **11a** and the function electrode **50** of the second adsorption column **11b** is continued (no in **S1-2**)**.**

When the current value I*² flowing through the electrochemical device of the second adsorption column becomes equal to or more than the threshold current I_{T} (Yes in **S1-2)**, the supply of the gas mixture to the first adsorption column **11a** is stopped (**S1-3**).

When the entirety of the gas to be adsorbed (e.g., carbon dioxide) in the gas mixture is adsorbed to the function electrode **50** of the first adsorption column **11a** in the first adsorption column **11a,** the gas to be adsorbed is not supplied to the second adsorption column **11b,** and hence a reaction between the first active material and the gas to be adsorbed (e.g., the above-mentioned formula (1)) does not occur in the second adsorption column **11b.** In this case, a current does not flow through the electrochemical device of the second adsorption column. Meanwhile, when the gas to be adsorbed (e.g., carbon dioxide) cannot be fully removed through the first adsorption column **11a** and slips therefrom, the gas to be adsorbed is supplied to the second adsorption column **11b.** Thus, the above-mentioned reaction occurs, and a current flows through the electrochemical device. Accordingly, a timing at which the supply of the gas mixture to the first adsorption column **11a** is stopped can be judged based on the current value I*² flowing through the electrochemical device of the second adsorption column **11b.**

Thus, the first adsorption step is ended.

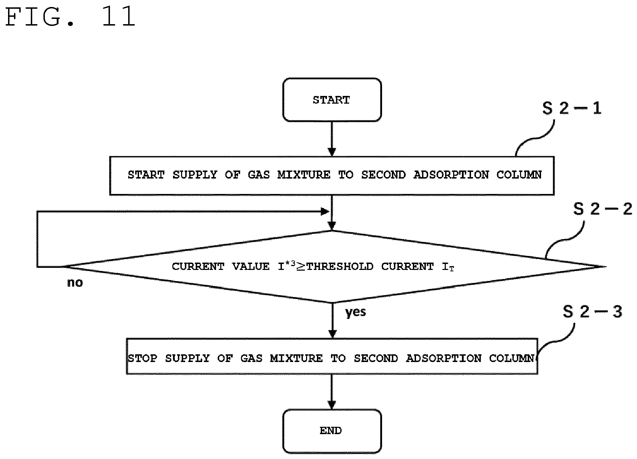

In one embodiment of the present invention, the second adsorption step (**S2**) is continuously performed subsequently to the first adsorption step (**S1**). FIG. **11** is a process flow chart for illustrating the second adsorption step of FIG. **9****.** In the second adsorption step, while the supply of the gas mixture (e.g., exhaust gas) to the first adsorption column **11a** is stopped, the gas mixture (e.g., exhaust gas) is supplied to the second adsorption column **11b.** More specifically, after the application of an adsorption voltage to the function electrode **50** of the third adsorption column **11c** is started, while the supply of the gas mixture (e.g., exhaust gas) to the first adsorption column **11a** is stopped (**S1-3**), the supply of the gas mixture (e.g., exhaust gas) to the second adsorption column **11b** is started (**S2-1**).

The control unit **51** starts the application of the adsorption voltage to the function electrode **50** of the third adsorption column **11c** and maintains the application of the adsorption voltage to the function electrode **50** of the second adsorption column **11b** by controlling the power source (not shown). In addition, the control unit **51** stops the application of the adsorption voltage to the function electrode **50** of the first adsorption column **11a** by controlling the power source (not shown). In one embodiment of the present invention, the adsorption voltage to the function electrode **50** of the third adsorption column **11c** and the adsorption voltage to the function electrode **50** of the second adsorption column **11b** are the same. The adsorption voltage to the function electrode **50** of the second adsorption column **11b** and the adsorption voltage to the function electrode **50** of the third adsorption column **11c** may be different from each other.

Next, the control unit **51** brings each of the first supply valve **21b,** the first connection valve **61b,** and the second discharge valve **31c** into a closed state, and brings each of the second supply valve **21c,** the second connection valve **71b,** and the third discharge valve **31d** into an open state. The blower **21e** is continuously driven also in the second adsorption step. Thus, the gas mixture (e.g., exhaust gas) including the predetermined gas is supplied to the second adsorption column **11b** through the gas supply line **21a** without being supplied to the first adsorption column **11a.** The gas mixture supplied to the second adsorption column **11b** passes through the second adsorption column **11b,** and is discharged to the second connection line **71a.** The gas mixture having passed through the second adsorption column **11b** (second adsorption column-passed gas) is supplied to the third adsorption column **11c** through the second connection line **71a.** The gas mixture supplied to the third adsorption column **11c** passes through the third adsorption column **11c,** and is discharged to the discharge line **31a.** When the gas mixture passes through the second adsorption column **11b** and when the gas mixture passes through the third adsorption column **11e,** the predetermined gas in the gas mixture is adsorbed to the function electrodes **50** thereof.

Next, until the second adsorption column can no longer fully remove the gas to be adsorbed from the gas mixture and a current value I*³ flowing through the electrochemical device of the third adsorption column becomes equal to or more than a preset threshold current I_{T}, the supply of the gas mixture (e.g., exhaust gas) to the second adsorption column **11b** is maintained, and the application of the adsorption voltage to each of the function electrode **50** of the second adsorption column **11b** and the function electrode **50** of the third adsorption column **11c** is continued (no in **S2-2**)**.**

When the current value I*³ flowing through the electrochemical device of the third adsorption column becomes equal to or more than the threshold current I_{T} (Yes in **S2-2**), the supply of the gas mixture (e.g., exhaust gas) to the second adsorption column **11b** is stopped (**S2-3**). Thus, the second adsorption step is ended.

In addition, in one embodiment of the present invention, the first release step is performed after the end of the first adsorption step and before the end of the second adsorption step. In the first release step, the predetermined gas (e.g., carbon dioxide) having been adsorbed to the first adsorption column **11a** is released from the first adsorption column **11a.** More specifically, the control unit **51** brings the first capture valve **41b** into an open state, and applies a release voltage having reverse polarity to the adsorption voltage to the function electrode **50** of the first adsorption column **11a** by controlling the power source (not shown). Thus, the predetermined gas (e.g., carbon dioxide) trapped by the function electrode **50** can be released from the function electrode **50.** In addition, the control unit **51** drives the pump **41e.** Thus, the predetermined gas (e.g., carbon dioxide) released from the function electrode **50** is sent to the storage facility (not shown) through the gas capture line **41a.** After that, the control unit **51** stops the driving of the pump **41e.**

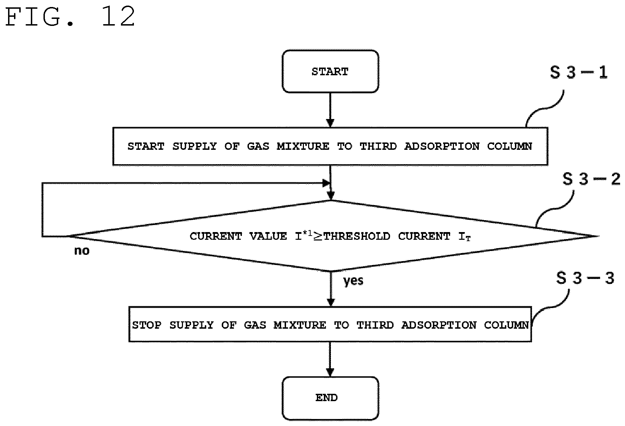

In addition, in one embodiment of the present invention, the third adsorption step (**S3**) is continuously performed subsequently to the second adsorption step (**S2**). FIG. **12** is a process flow chart for illustrating the third adsorption step of FIG. **9****.** In the third adsorption step, while the supply of the gas mixture (e.g., exhaust gas) to the second adsorption column **11b** is stopped, the gas mixture (e.g., exhaust gas) is supplied to the third adsorption column **11c.** More specifically, after the application of an adsorption voltage to the function electrode **50** of the first adsorption column **11a** is started, while the supply of the gas mixture (e.g., exhaust gas) to the second adsorption column **11b** is stopped (**S2-3**), the supply of the gas mixture (e.g., exhaust gas) to the third adsorption column **11c** is started (**S3-1**).

The control unit **51** starts the application of the adsorption voltage to the function electrode **50** of the first adsorption column **11a** and maintains the application of the adsorption voltage to the function electrode **50** of the third adsorption column **11c** by controlling the power source (not shown). In addition, the control unit **51** stops the application of the adsorption voltage to the function electrode **50** of the second adsorption column **11b** by controlling the power source (not shown). In one embodiment of the present invention, the adsorption voltage to the function electrode **50** of the first adsorption column **11a** and the adsorption voltage to the function electrode **50** of the third adsorption column **11c** are the same. The adsorption voltage to the function electrode **50** of the first adsorption column **11a** and the adsorption voltage to the function electrode **50** of the third adsorption column **11c** may be different from each other.

Next, the control unit **51** brings each of the second supply valve **21c,** the second connection valve **71b,** and the third discharge valve **31d** into a closed state, and brings each of the third supply valve **21d,** the third connection valve **81b,** and the first discharge valve **31b** into an open state. The blower **21e** is continuously driven also in the third adsorption step. Thus, the gas mixture (e.g., exhaust gas) including the predetermined gas is supplied to the third adsorption column **11c** through the gas supply line **21a** without being supplied to the first adsorption column **11a** and the second adsorption column **11b.** The gas mixture supplied to the third adsorption column **11c** passes through the third adsorption column **11c,** and is discharged to the third connection line **81a.** The gas mixture having passed through the third adsorption column **11c** (third adsorption column-passed gas) is supplied to the first adsorption column **11a** through the third connection line **81a.** The gas mixture supplied to the first adsorption column **11a** passes through the first adsorption column **11a,** and is discharged to the discharge line **31a.** When the gas mixture passes through the third adsorption column **11c** and when the gas mixture passes through the first adsorption column **11a,** the predetermined gas in the gas mixture is adsorbed to the function electrodes **50** thereof.

Next, until the third adsorption column can no longer fully remove the gas to be adsorbed from the gas mixture and a current value I^{*1} flowing through the electrochemical device of the first adsorption column becomes equal to or more than a preset threshold current I_{T}, the supply of the gas mixture (e.g., exhaust gas) to the third adsorption column **11c** is maintained, and the application of the adsorption voltage to each of the function electrode **50** of the first adsorption column **11a** and the function electrode **50** of the third adsorption column **11c** is continued (no in **S3-2**).

When the current value I^{*1} flowing through the electrochemical device of the first adsorption column becomes equal to or more than the threshold current I_{T} (Yes in **S3-2**), the supply of the gas mixture (e.g., exhaust gas) to the third adsorption column **11c** is stopped (**S3-3**). Thus, the third adsorption step is ended. The threshold current I_{T} in the first adsorption step, the threshold current I_{T} in the second adsorption step, and the threshold current I_{T} in the third adsorption step may have the same value as one another, or may have different values from one another.

In addition, in one embodiment of the present invention, the second release step is performed after the end of the second adsorption step and before the end of the third adsorption step. In the second release step, the predetermined gas (e.g., carbon dioxide) having been adsorbed to the second adsorption column **11b** is released from the second adsorption column **11b.** More specifically, the control unit **51** brings the first capture valve **41b** into a closed state and also brings the second capture valve **41c** into an open state, and applies a release voltage to the function electrode **50** of the second adsorption column **11b** by controlling the power source (not shown). Thus, the predetermined gas (e.g., carbon dioxide) trapped by the function electrode **50** of the second adsorption column **11b** can be released from the function electrode **50.** The predetermined gas (e.g., carbon dioxide) released from the function electrode **50** is sent to the storage facility (not shown) in the same manner as in the above-mentioned first release step.

In one embodiment of the present invention, the first adsorption step (**S1**), the second adsorption step (**S2**), and the third adsorption step (**S3**) are sequentially repeated until a stop signal is input into the control unit **51** (no in **S4**) . In this case, the third release step is performed after the end of the third adsorption step and before the end of the repeated first adsorption step. In the third release step, the predetermined gas (e.g., carbon dioxide) having been adsorbed to the third adsorption column **11c** is released from the third adsorption column **11c.** More specifically, the control unit **51** brings the second capture valve **41c** into a closed state and also brings the third capture valve **41d** into an open state, and applies a release voltage to the function electrode **50** of the third adsorption column **11c** by controlling the power source (not shown). Thus, the predetermined gas (e.g., carbon dioxide) trapped by the function electrode **50** of the third adsorption column **11c** can be released from the function electrode **50.** The predetermined gas (e.g., carbon dioxide) released from the function electrode **50** is sent to the storage facility (not shown) in the same manner as in the above-mentioned first release step.

After that, when the stop signal is input into the control unit **51** (yes in **S4**), the control unit **51** stops the application of the voltage to the function electrode **50,** and also stops the driving of the blower **21e.** Thus, the operation of the gas adsorption system **110** is stopped. While judgment as to whether the stop signal is input into the control unit **51** or not is made (**S4**) after the third adsorption step (**S3**) in the embodiment of the present invention described above, the judgment as to whether the stop signal is input into the control unit **51** or not may be made (**S4**) between the first adsorption step (**S1**) and the second adsorption step (**S2**), or between the second adsorption step (**S2**) and the third adsorption step (**S3**).

### Industrial Applicability

The gas adsorption system and the method of operating a gas adsorption system according to the embodiments of the present invention can be suitably used for the separation and capture of the predetermined gas from the gas mixture, and can be particularly suitably used for a Carbon dioxide Capture, Utilization and Storage (CCUS) cycle.

### Reference Signs List

- **11**: adsorption column
- **11a**: first adsorption column
- **11b**: second adsorption column
- **11c**: third adsorption column
- **50**: function electrode
- **60**: counter electrode
- **100**: electrochemical device
- **110**: gas adsorption system

## Claims

1. A gas adsorption system, comprising a plurality of gas adsorption units each including an electrochemical device configured to adsorb and release a predetermined gas,
wherein the plurality of gas adsorption units include:
a first adsorption unit to which the predetermined gas is supplied; and
a second adsorption unit to which the gas having passed through the first adsorption unit is supplied.

2. The gas adsorption system according to claim 1,
wherein the electrochemical device includes:
a function electrode containing a first active material; and
a counter electrode containing a second active material.

3. The gas adsorption system according to claim 2,
wherein the predetermined gas is carbon dioxide,
wherein the first active material includes anthraquinone, and
wherein the second active material includes polyvinylferrocene.

4. The gas adsorption system according to any one of claims 1 to 3, wherein the plurality of gas adsorption units further include a third adsorption unit to which the gas having passed through the second adsorption unit is supplied.

5. A method of operating the gas adsorption system of claim 4, comprising:
a first adsorption step of supplying the predetermined gas to the first adsorption unit, and supplying the gas having passed through the first adsorption unit to the second adsorption unit, to thereby cause the predetermined gas to be adsorbed to each of the first adsorption unit and the second adsorption unit; and
a second adsorption step of, while stopping the supply of the predetermined gas to the first adsorption unit, supplying the predetermined gas to the second adsorption unit, and supplying the gas having passed through the second adsorption unit to the third adsorption unit, to thereby cause the predetermined gas to be adsorbed to each of the second adsorption unit and the third adsorption unit.

6. The method of operating the gas adsorption system according to claim 5, further comprising:
a first release step of releasing the predetermined gas, which has been adsorbed to the first adsorption unit, from the first adsorption unit after end of the first adsorption step and before end of the second adsorption step; and
a third adsorption step of, while stopping the supply of the predetermined gas to the second adsorption unit, supplying the predetermined gas to the third adsorption unit, and supplying the gas having passed through the third adsorption unit to the first adsorption unit, to thereby cause the predetermined gas to be adsorbed to each of the first adsorption unit and the third adsorption unit.

7. The method of operating the gas adsorption system according to claim 6, further comprising:
sequentially repeating the first adsorption step, the second adsorption step, and the third adsorption step;
a second release step of releasing the predetermined gas, which has been adsorbed to the second adsorption unit, from the second adsorption unit after end of the second adsorption step and before end of the third adsorption step; and
a third release step of releasing the predetermined gas, which has been adsorbed to the third adsorption unit, from the third adsorption unit after end of the third adsorption step and before end of the repeated first adsorption step.
